# EUROPEAN PATENT APPLICATION

(11) **EP 3 225 838 A1**
(43) Date of publication of application: **04.10.2017**
(21) Application number: 16163023.1
(22) Date of filing: 30.03.2016
(51) Int. Cl.: F03D 7/00, F03D 7/02, F03D 17/00

(54) **METHOD AND ARRANGEMENT FOR PERFORMING A WIND DIRECTION MEASUREMENT**

(71) Applicant: Siemens Aktiengesellschaft, 80333 München (DE)
(72) Inventor: Esbensen, Thomas, 7400 Herning (DK)

(57) **Abstract**

It is described a method for performing a wind direction measurement for a wind turbine (1), the method comprising:
measuring plural sample pairs ((x,y),(α',51)), each pair comprising a measured relative wind direction (x, α') and an associated performance quantity (y, 51), the measured relative wind direction (x, α') representing a measurement result of measuring a difference angle between a real wind direction (19) and an orientation (14) of a measurement equipment (15), in particular a direction (13) orthogonal to a rotor blade plane (11), the performance quantity (y, 51) indicating a performance of the wind turbine; evaluating a degree of asymmetry of the performance quantity (y, 51) with respect of a measured relative wind direction equal to zero;
measuring a further relative wind direction; and correcting the further measured relative wind direction based on the degree of asymmetry.

## Description

### Field of invention

The present invention relates to a method and to an arrangement for performing a wind direction measurement for a wind turbine and further relates to a wind turbine.

### Art Background

To obtain a maximal power output of a wind turbine, it may be required to align the wind turbine such that the wind direction is parallel to the nacelle orientation, i.e. orthogonal to a rotor plane in which the rotor blades rotate. Conventionally, wind direction measurement equipment is utilized to measure the wind direction and based on the measured wind direction the yawing system of the wind turbine is activated to properly align the wind turbine to accurately face the wind. In most situations it may be important for a wind turbine to face the wind, as this may result in maximum power production and minimum loads. Therefore, the wind turbine is yawed based on wind direction measurements, typically performed using equipment installed on top of the turbine nacelle. If the wind direction measurement is erroneous, it may result in a significant production loss.

It has been observed that conventional wind direction measurements not in all situations are reliable and accurate. Thus, the wind turbine is not operated in all situations for producing maximal power and experiencing minimum loads.

Thus, there may be a need for a method and arrangement for performing (in particular involving calibrating and/or adjusting erroneous raw measurement data) a wind direction measurement, in particular utilized in a wind turbine, wherein the actual wind direction can reliably and accurately be determined. Further, there may be a need for a wind turbine which takes advantage of a more accurate wind direction measurement for properly aligning the wind turbine to face the wind.

### Summary of the Invention

This need may be met by the subject matter according to the independent claims. Advantageous embodiments of the present invention are described by the dependent claims.

According to an embodiment of the present invention, it is provided a method for performing (in particular involving calibrating and/or adjusting and/or correcting erroneous raw measurement data) a wind direction measurement for a wind turbine, the method comprising measuring plural sample pairs, each pair comprising a measured relative wind direction and an associated performance quantity, the measured relative wind direction representing a measurement result of measuring a difference angle between a real wind direction and an orientation of a measurement equipment, in particular a direction orthogonal to a rotor blade plane, the performance quantity indicating a performance of the wind turbine, evaluating a degree of asymmetry of the performance quantity with respect of a measured relative wind direction of zero degrees (e.g. assess a degree to which the performance quantity for measured relative wind direction lower than zero and higher than zero are different); measuring a further relative wind direction, and correcting the further measured relative wind direction based on the degree of asymmetry.

In particular, the wind may be exactly facing sensor, if the measured relative wind direction is zero.

The method may for example be performed by an arrangement for performing a wind direction measurement according to an embodiment of the present invention. For measuring the plural sample pairs, further measurement equipment including sensors may be used. The sample pairs may represent the measured relative wind direction and the associated performance quantity at different time points. The relative wind direction may be a difference angle between a real wind direction (relative to the surface of the earth) and an orientation of the wind measurement equipment, in particular the difference angle between the real wind direction and a rotation axis direction of the rotor of the wind turbine. The direction of the rotor axis is orthogonal to the rotor blade plane.

The measuring the plural sample pairs as well as the evaluating the degree of asymmetry may be performed continuously without interrupting the normal operation of the wind turbine, thereby allowing the wind turbine to produce electric energy. The wind measurement equipment may for example be installed at or on a nacelle of the wind turbine. The measurement equipment, for example a wind direction/speed sensor, such as a wind vane of sonic instrument, may for example be oriented to be substantially parallel to the nacelle, i.e. orthogonal to the rotor plane. Ideally, the measurement equipment should indicate an angle of 0° between the real wind direction and the orientation of the measurement equipment, when the real wind direction is orthogonal to the rotor plane. However, due to adjustment errors or disturbances of the measurement or systematic errors of the measurement equipment, the plural sample pairs (in particular representing raw data) may be erroneous and may therefore not reflect the true relative wind direction. The method according to this embodiment of the present invention is therefore designed to correct and calibrate the raw measurement data, i.e. the plural sample pairs, in order to derive more accurate and reliable results regarding the relative wind direction.

The performance quantity may be defined in a number of ways. The performance parameter may the performance of the wind turbine regarding power production, in particular active power production. The performance quantity may for example be determined based on conventionally measured mechanical and/or electrical quantities of the wind turbine which relate to the effective wind speed and/or to power output of the wind turbine.

An asymmetry of the performance quantity with respect to a vanishing measured relative wind direction may be present, when the performance quantity does not have same (or similar) values at locations spaced apart from the relative wind direction of 0° by a same amount. For example, when the performance quantity (on average or in certain regions) for measured relative wind directions larger 0° is higher (or lower) than the performance quantity at measured relative wind directions lower than 0°, an asymmetry of the performance quantity may be evaluated. In particular, an asymmetry of the performance quantity may be evaluated, when the performance quantity does not exhibit a mirror symmetry having a symmetry plane at the measured relative wind direction of 0°. The asymmetry may be evaluated based on a number of criteria which will be described in more detail below.

The degree of an asymmetry may indicate to what extent or degree the performance quantity deviates from a mirror symmetry having a mirror plane at 0° of the measured relative wind direction. The evaluation may include processing the plural sample pairs using a processor in which a suitable program is loaded.

The further relative wind direction may be measured using the same measurement equipment as has been used for measuring the plural sample pairs each pair comprising a measured relative wind direction and an associated performance quantity. However, due to the evaluated degree of asymmetry, the further relative wind direction may advantageously be corrected, in order to obtain a more accurate and reliable result of a relative wind direction measurement. Correcting the further measured relative wind direction may result in a corrected measured relative wind direction which may be used in other control components of the wind turbine for controlling the wind turbine, in particular a yawing system, in order to properly orient the wind turbine such as to face accurately the wind.

One idea of the present invention is to evaluate a performance parameter or performance quantity relative to the relative wind direction measurement. The estimated wind speed derived based on rotational speed, active electrical power, pitch angle, and model data may be used as an example of a performance quantity. Another example of a performance quantity is the active electrical power which may be conventionally measured.

The relative wind direction may be defined as the global wind direction (or real wind direction) minus the yaw position. This may correspond to the yaw error as seen by the wind direction sensor.

The method does not necessarily require any filtering equipment, in particular any filter would introduce certain complexity and would require for configuring the filters properly.

The method may be implemented in software and/or hardware.

According to an embodiment of the present invention, the method further comprises defining a bin vector (e.g. xd), each component comprising a range of angles, defining an average performance vector (e.g. yd), each component being an average of the performance quantity comprised in the sample pairs, for which the measured relative wind direction lies within the range of angles defined by the corresponding component of the bin vector, defining a count vector (e.g. nd), each component comprising the number of sample pairs, that lie within the respective range of angles defined by the corresponding component of the bin vector, and utilizing the bin vector, the average performance vector, and the count vector for evaluating the degree of asymmetry.

By defining the bin vector, the average performance vector and the counter vector, an effective implementation can be achieved, supporting an arbitrary number of sample pairs, when the method is continuously (indefinitely) performed during operation of the wind turbine, minimizing required resources. Three vectors of same dimensions are therefore defined, which dimension remains the same also if the algorithm is run forever, producing an infinite number of sample pairs.

The bin vector comprises in each component a range of angle. Ranges of angles in two different components of the bin vector should not overlap and should be successive. The range of angles in different components of the bin vector may for example have a same width, for example 0.5°, 1°, 2° or other. The bin vector may be predefined to cover an overall range of angles which are expected as typical output of the measurement equipment for measuring the relative wind direction.

A particular component of the average performance vector holds the average of the performance quantity averaged over those performance quantities of the plural sample pairs for which the measured relative wind direction lies within the angle range of the corresponding component of the bin vector. The count vector just holds in every component the number of samples in the bin as defined by the bin vector.

The (in particular fixed, not changing) dimension of each of the bin vector, the average performance vector and the count vector may for example be between 20 and 50. Thus, storing these vectors in a storage of a processor does not require much storage space. Thus, the method may be implemented without requiring extensive resources.

In the following embodiments, different ways to evaluate the degree of asymmetry are explained. Each of these ways may be applied individually or in combination.

The embodiments of different ways to evaluate the degree of asymmetry may be applied on the binned raw data, thus using the bin vector, the average performance vector, and the count vector.

According to an embodiment of the present invention, the evaluating the degree of asymmetry further comprises fitting a straight line on a curve defined by the plural sample pairs or pairs of measured relative wind direction and performance quantity as defined by the bin vector, the average performance vector, and the count vector, and determining the slope of the straight line, wherein the correcting the further measured relative wind direction based on the degree of asymmetry comprises subtracting from the further measured relative wind direction a modification value based on the slope of the straight line.

The fitting the straight line (linear relationship) may be performed by conventional available techniques, e.g. least squares fit. Usually, the fitting procedure outputs the slope of the linear curve. The data, i.e. the bin vector, the average performance vector and the count vector may be approximated by a straight line. The slope of the line (positive or negative) may indicate where the performance is superior: If the slope is negative, performance is superior for relative wind directions less than 0°. If the slope is positive, the performance is superior for relative wind directions larger than 0°. Therefore, in order to obtain a more reliable measurement result, a modification value based on the slope of the straight line is subtracted from the further measured relative wind direction.

According to an embodiment of the present invention, the modification value is proportional to the slope of the straight line, wherein a proportionality factor is non-negative. The modification value may be a constant having a sign dependent on the sign of the slope or may be dependent on the magnitude of the slope. The modification value may for example be proportional to the slope (or be a particular power of the slope or a polynomial of the slope). Thereby, a simple implementation may be achieved.

According to an embodiment of the present invention, the evaluating the degree of asymmetry comprises determining a maximum location being that measured relative wind direction or that range of angles for which the associated performance quantity or averaged performance quantity is maximal, wherein the correcting the further measured relative wind direction based on the degree of asymmetry comprises subtracting from the further measured relative wind direction a modification value proportional to the maximum location, wherein a proportionality factor is larger than zero.

The maximum location may be that location of the measured relative wind direction which results in a highest associated performance quantity or average performance quantity. When the binned data are used, the fitting takes into account the number of samples in each of the bins for example by applying or considering a corresponding weighting in the fitting procedure.

According to an embodiment of the present invention, the evaluating the degree of asymmetry comprises averaging the performance quantity or the averaged performance quantity for which the associated measured relative wind direction or the angle range is larger than zero, to obtain a first average performance quantity, and averaging the performance quantity or the averaged performance quantity for which the associated measured relative wind direction or the angle range is smaller than zero, to obtain a second average performance quantity, determining which of the first average performance quantity or the second average performance quantity is larger, wherein the correcting the further measured relative wind direction based on the degree of asymmetry comprises determining a modification value that is positive, if the first average performance quantity is larger than the second average performance quantity, determining a modification value that is negative, if the first average performance quantity is larger than the second average performance quantity, and subtracting the modification value from the further measured relative wind direction.

When the first average performance quantity is greater than the second average performance quantity, the performance quantity or the average of the performance quantity (comprised in each vector of the average performance vector) is larger for measured relative wind directions larger than 0° than for measured relative wind direction smaller than 0°. The modification value may be determined based only thereon which of the first and second average performance quantity is larger or also in other embodiments may depend on the difference between the first average performance quantity and the second average performance quantity. By subtracting the modification value from the further measured relative wind direction, the corrected measured relative wind direction may more closely correspond to the real relative wind direction.

Other algorithms to evaluate the degree of asymmetry of the performance quantity with respect to a vanishing measured relative wind direction are possible.

According to an embodiment of the present invention, the method further comprises, while measuring the plural sample pairs, determining at least one operational and/or environmental parameter, in particular an estimated wind speed or actual (e.g. measured) wind speed, and storing the modification value in association of with the at least one operational and/or environmental parameter.

When additionally at least one operational and/or environmental parameter is determined (in particular measured), the modification value may in later measurements of the relative wind direction be stored and accessed as a modification value specific for the (then measured or determined) at least one operational and/or environmental parameter and in particular on the magnitude of the at least one operational and/or environmental parameter. Thereby, the method may even be refined and thus improved.

According to an embodiment of the present invention, the method further comprises determining the operational and/or environmental parameter, and subtracting a value proportional to the modification value associated to the determined operational and/or environmental parameter to obtain the corrected measured relative wind direction.

Thus, an operational and/or environmental parameter specific correction of the measured relative wind direction may be performed. In particular, the modification value for different magnitudes of the operational and/or environmental parameter, in particular the wind speed, may have different magnitude.

According to an embodiment of the present invention, a proportionality factor (used for determining the modification value from the degree of asymmetry) is selected to convert the performance quantity into wind direction offset (hence involving change of unit
The factor may be selected large enough to ensure a sufficient fast convergence, but not too large, such that it may cause overshooting. The magnitude of the proportionality factor may be determined depending on the application and by experience or trial and error.

According to an embodiment of the present invention, the method is continuously performed, in particular during normal operation, wherein the method is further in particular performed irrespective whether the wind direction and/or wind speed and/or yaw position changes or not.

Thus, the operation of the wind turbine is not required to be interrupted and particular additional measurement equipment may not be necessary.

According to an embodiment of the present invention, the performance quantity is or comprises at least one of the following: an effective wind speed, representing a measure of the wind speed experienced by the wind turbine effective for energy production, in particular representing a component of the wind speed in a direction orthogonal to a rotor blade plane, a power, in particular active power, produced by the wind turbine, in particular applied in low and medium wind ranges; a pitch angle, in particular applied at high wind speed; an increase in rotor speed; or a load indicating quantity. The performance quantity could also be or comprise other quantities.

The performance of the wind turbine may be estimated or measured in many different ways. At low and medium wind speeds (for example at wind speeds below 12 m/s), the produced power, in particular produced active power, may be used as a performance measure, but also an increase in the rotor speed could indicate an increased performance. In high wind speed ranges, such as wind speeds above 12 m/s, the pitch angle may be a reasonable performance parameter, as the optimal nacelle position would result in maximum wind inflow and a greater pitch angle. Combinations (as is actually done for deriving the effective wind speed) of the produced power, in particular produced active power, increase of rotor speed and/or pitch angles are possible as suitable performance parameters. The effective wind speed may generally be the best suitable performance parameter, wherein the effective wind speed may be equal to the wind speed component parallel to the nacelle, i.e. orthogonal to the rotor plane. The effective wind speed may provide a consistent and appropriate measure of the wind turbine performance at all wind speeds, i.e. a low, medium, and high wind speed range. The effective wind speed may for example be estimated or calculated from a turbine model, utilizing the actual power production, the actual rotor speed and the actual pitch angle. This may be possible, as all possible combinations of wind speed, rotor speed, and pitch angle may result in a theoretical power output and thus the effective wind speed may be estimated, if the actual operational values are known. Thereby, the power, the pitch angle, and the increase of rotor speed may be conventionally available measurement values. Thus, the method may be applied without requiring additional measurement devices or measurement sensors.

According to an embodiment of the present invention, the effective wind speed is estimated using a turbine model, taking into account actual (in particular active and possibly also reactive) power produced, actual rotor speed, and/or actual pitch angle. The turbine model may be a physical/mathematical model predicting the operation of the wind turbine and thereby relating mechanical and electrical parameters to each other. Thus, the method may be implemented in a simple manner.

The effective wind speed may for example be calculated using a look-up table having columns of the pitch angle, the rotational speed, and the power, thus expressing the effective wind speed as a function of the pitch angle, the rotational speed and the power. The effective wind speed may be calculated as a function of alternative or additional electrical or mechanical quantities of the wind turbine.

It should be understood that features, individually or in any combination disclosed, applied, explained or provided for a method for performing a wind direction measurement for a wind turbine may also be, individually or in any combination, applied to an arrangement for performing a wind direction measurement for a wind turbine according to an embodiment of the present invention and vice versa.

According to an embodiment of the present invention, it is provided an arrangement for performing (in particular involving calibrating and/or adjusting and/or correcting erroneous raw measurement data) a wind direction measurement for a wind turbine, wherein the arrangement is adapted to receive plural measured sample pairs, each pair comprising a measured relative wind direction and an associated performance quantity, the measured relative wind direction representing a measurement result of measuring a difference angle between a real wind direction and an orientation of a measurement equipment, in particular a direction orthogonal to a rotor blade plane, the performance quantity indicating a performance of the wind turbine, to evaluate a degree of asymmetry of the performance quantity with respect of a vanishing measured relative wind direction; to receive a further measured relative wind direction, and to correct the further measured relative wind direction based on the degree of asymmetry.

To measure the plural sample pairs, the arrangement may further comprise a wind direction measurement equipment, such as a wind vane or sonic instrument and for measuring the performance quantity the arrangement may comprise mechanical and/or electrical sensors that measure electrical and/or mechanical quantity based on which the performance quantity may be calculated.

According to another embodiment of the present invention, it is provided a wind turbine, comprising a rotor having rotor blades connected thereto and rotating in a rotor blade plane, an arrangement for performing a wind direction measurement for the wind turbine according to the embodiment described above, and a yawing system for directing the rotor blade plane based on measured relative wind directions obtained by the arrangement for performing the wind direction measurement, the wind turbine in particular further comprising a wind direction measuring device, in particular at least one of a wind vane and/or a sonic instrument, for measuring the plural samples of the relative wind direction.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings. The invention is not limited to the illustrated or described embodiments.
Fig. 1 schematically illustrates a wind turbine according to an embodiment of the present invention in a top view including an arrangement for calibrating and/or performing a wind direction measurement according to an embodiment of the present invention;
Fig. 2 illustrates in a schematic view of the effective wind vector as used as a performance parameter according to an embodiment of the present invention;
Fig. 3 illustrates a flow-chart of a method for performing a wind direction measurement according to an embodiment of the present invention; and
Fig. 4 illustrates a graph as considered according to an embodiment of the present invention.

### Detailed Description

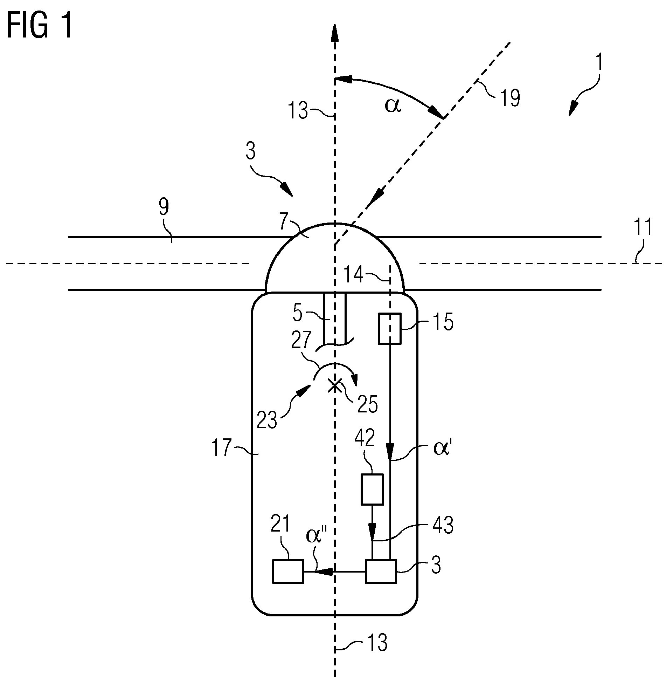

**Fig. 1** illustrates, in a top view, a schematic representation of a wind turbine 1 according to an embodiment of the present invention including an arrangement 3 for calibrating and/or performing a wind direction measurement according to an embodiment of the present invention. Thereby, the arrangement 3 is adapted to perform a method for calibrating and/or performing a wind direction measurement for the wind turbine 1 according to an embodiment of the present invention.

The wind turbine 1 includes a rotor 3 including a rotor shaft 5, a rotor hub 7 and plural rotor blades 9 connected to the rotor hub 7. The rotor blades 9 rotate in a rotor blade plane 11 which is orthogonal to the rotation axis 13 of the rotor shaft 5. For measuring plural samples of the relative wind direction, the wind turbine 1 comprises an wind direction measuring device 15 which is installed at or on the nacelle 17. The nacelle 17 supports the rotor shaft 5 and further includes a not illustrated electrical generator mechanically coupled to the rotor shaft 5 and further comprises a not illustrated converter and wind turbine transformer. The nacelle direction is defined by the direction of the rotor axis 13.

The real wind direction 19 includes, in projection onto the surface of the earth at the location of the wind turbine 1, a difference angle α with the nacelle direction 13, i.e. the direction of the rotation axis 13. The angle α defines the relative wind direction, i.e. the direction of the wind 19 relative to the nacelle direction 13.

The wind direction measuring device 15 is provided for measuring the relative wind direction α. However, due to adjustment errors, measurement errors, or systematic errors of the wind direction measuring device 15, the wind direction measuring device measures an erroneous angle α' instead of the real relative wind direction α. The arrangement 3 is provided for calibrating/correcting the erroneous measured relative wind direction α' (and thus for performing a wind direction measurement) in order to derive a corrected measured relative wind direction α" which should reflect to a higher accuracy the real relative wind direction α. The corrected measured relative wind direction α" is provided to a yaw controller 21 which is adapted to control a yawing system 23 which allows to turn the rotor plane 11, in particular including the nacelle 17, around a vertical rotation axis 25, as is illustrated by the curved arrow 27, in order to direct the rotor plane 11 such as facing the wind 19, i.e. such that the rotor axis 13 aligns with the wind direction 19. In this situation, the difference angle α is 0.

According to an embodiment of the present invention, the wind direction measuring device 15 measures plural sample pairs each including a relative wind direction and a (associated) performance quantity as describe below.

Therefore, the wind direction measuring device 15 measures plural samples of a relative wind direction representing a difference angle α between a real wind direction 19 and an orientation 14 of a measurement equipment, in particular a direction 13 orthogonal to a rotor blade plane 11, to obtain plural measured relative wind directions α'.

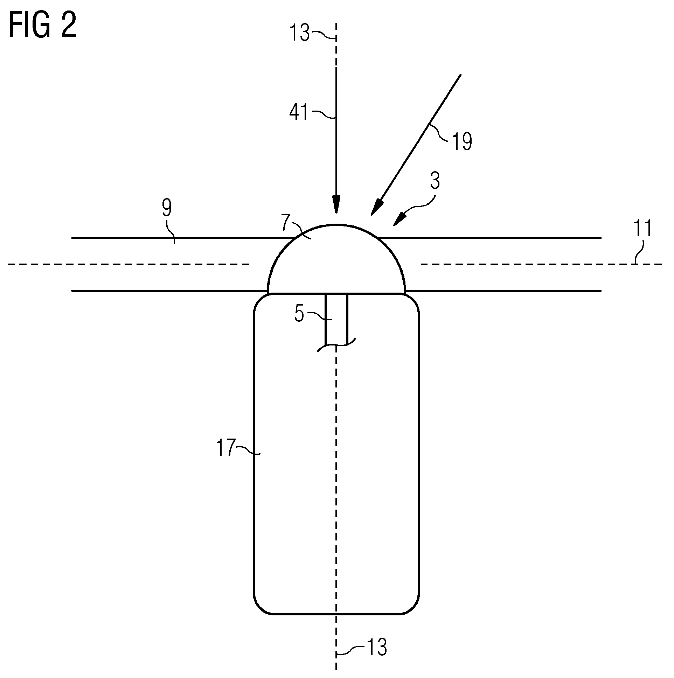

The method performed by the arrangement 3 further comprises to measure plural samples of a performance parameter indicating a performance of the wind turbine 1. The performance parameter may for example be the effective wind speed which will be explained with reference to **Fig. 2****.** The effective wind vector 41 can be considered to be the component of the real wind direction 19 parallel to the nacelle direction 13 (corresponding to the rotor axis of the rotor shaft 5). The effective wind vector 41 may be calculated using a turbine model and taking into account actual power production, actual rotor speed and actual pitch angle.

The plural samples of the performance parameter are indicated as a signal 43 which is also supplied to the arrangement 3 (illustrated in Fig. 1) which receives the plural measured samples of the relative wind direction α'. In Fig. 1, the performance parameter 43 is estimated and output by a performance estimator 42 which receives as input not illustrated operational parameters of the wind turbine, in particular relating to electrical and/or mechanical performance of the wind turbine 1.

The arrangement 3 is adapted to evaluate a degree of asymmetry of the performance quantity with respect of a vanishing measured relative wind direction. When further plural samples of the relative wind direction are measured, the arrangement 3 outputs the corrected measured relative wind directions α" which are corrected based on the based on the degree of asymmetry.

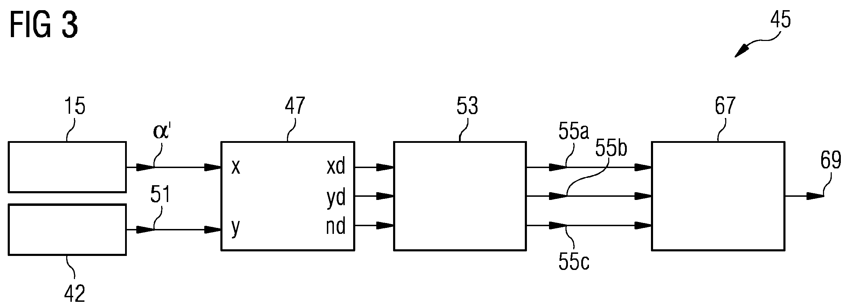

An example of an algorithm according to an embodiment of the present invention which is performed by the arrangement 3 is illustrated in **Fig. 3** as a flow-chart 45. According to the flow-chart 45, a weather station or in particular wind direction measuring device 15 (for example the wind direction measuring device 15 illustrated in the wind turbine 1 illustrated in Fig. 1) performs plural measurements (as a function of time) of a relative wind direction and outputs the measured relative wind direction α' and supplies it to a data processor 47.

Further, a performance estimator 42 estimates a performance quantity 51 and supplies it to the data processor 47. The measured relative wind direction α' is also denoted x and the performance quantity 51 is also denoted y in the following. The data processor 47 forms, from plural sample pairs (x, y) a bin vector xd, each component comprising a range of angles. The data processor 47 further forms an average performance vector yd, each component being an average of the performance quantity y comprised in the sample pairs (x, y), for which the measured relative wind direction x lies within the range of angles defined by the corresponding component of the bin vector xd. The data processor 47 further constructs a count vector nd, each component comprising the number of sample pairs (x, y), that lie within the respective range of angles defined by the corresponding component of the bin vector xd.

The bin vector xd may for example comprise components each having a width of 1°. One component may for example define a range [-15°, -14°], another may define a range [-14°, 13°], ... and a last range may be defined by [+14°, 15°]. One component may for example define a range [-15°, -14°[, another may define a range [-14°, 13°[, ... and a last range may be defined by [+14°, 15°[. One component may for example define a range ]-15°, -14°], another may define a range]-14°, 13°], ... and a last range may be defined by ]+14°, 15°]. Other range widths are possible and also other limits of the overall range are possible. In other embodiments the components of the bin vector may for example define centers of ranges having a constant width.
For each bin, the accumulated average performance quantity y is stored in the average performance vector yd.

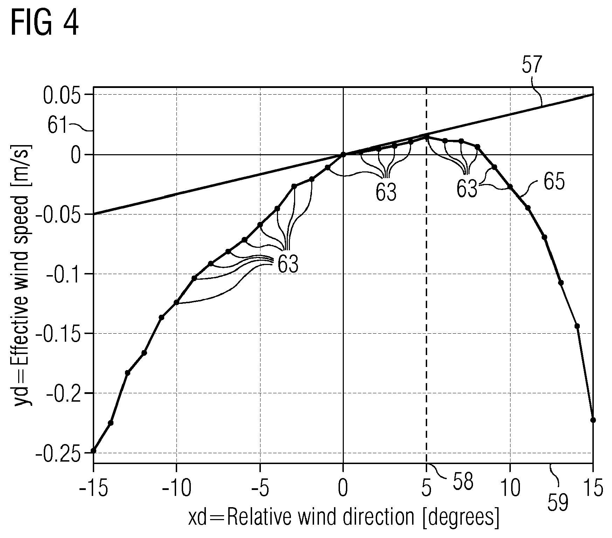

The bin vector xd, the average performance vector yd, and the count vector nd are supplied to a performance evaluator 53 which is adapted to evaluate a degree of a symmetry of the performance quantity with respect to a vanishing measured relative wind direction α', i.e. the measured relative wind direction is zero. The evaluation performed by the performance evaluator 53 may be implemented in a number of different ways. However, in each case, the performance evaluator 53 outputs a modification value 55 which is denoted 55a, 55b, or 55c for the different ways of the evaluation. According to a first evaluation algorithm (denoted a)), the data (xd, yd, nd) is approximated by a straight line as is illustrated in **Fig. 4****,** the straight line being labelled with reference sign 57. Thereby, Fig. 4 illustrates a graph having an abscissa 59 indicating the relative wind direction α' or xd and having an ordinate 61 indicating the effective wind speed as one example of a performance measure. In Fig. 4, the data points 63 are the binned raw data, i.e. the binned plural sample pairs, each comprising a measured relative wind direction and an associated performance quantity. Thereby, the measured relative wind direction is divided in bins having a width of 1° and starting e.g. from -15° and ending at 15°. Before plotting the data points 63, the effective wind speed at the measured relative wind direction of 0° has been subtracted such that the curve 65 connecting the data points 63 represents a normalized curve.

As can be appreciated from Fig. 2, the curve 65 (connecting the data points 63) is asymmetric with respect to the measured relative wind direction of 0°. It is obvious from the graph 65 that the effective wind speed (as one example of a performance quantity) is generally higher for a measured relative wind direction larger than 0° than for measured relative wind direction smaller than 0°.

The degree of asymmetry may be evaluated in a number of different ways by the performance evaluator 53 illustrated in Fig. 3.

According to the evaluation algorithm a), the data (xd, yd, nd) is approximated by the straight line 57, as illustrated in Fig. 4. The slope of the line 57 (positive or negative) indicates where the performance is superior. For a negative slope, the performance is superior for relative wind directions less than 0°. For a positive slope, the performance is superior for relative wind directions larger than 0°. Based on the sign of the slope of the straight line 57, the performance evaluator 53 outputs the modification value 55a associated to this evaluation algorithm. The modification value is supplied to the wind direction modifier 67 which outputs a wind direction offset which is either increased or decreased by the modification value 55a. The modification can be applied with a fixed step side or may be based on a change that is a function of the slope of the straight line 57 (for example a steeper slope may indicate a higher certainty).

According to an evaluation algorithm b), the relative wind direction sample with highest performance is considered. Thereby, the data (xd, yd) may directly indicate which relative measured wind direction maximizes the performance quantity. In the example data set illustrated in Fig. 4 it is obvious that yd is maximized for xd = 5°, being the maximum location 58. Hence, it is expected that the performance is improved for a relative wind direction of 5° (which is relative to the current reading of the wind turbine, which may already be compensated by a wind direction offset). For this evaluation algorithm, the performance evaluator 53 outputs the modification value 55b and supplies it to the wind direction modifier 67 which, based thereon, determines a wind direction offset 69. The wind direction offset may be added to the measured relative wind direction or may be subtracted from the relative wind direction as originally measured by the wind direction measuring device 15.

According to an evaluation algorithm c), the relative wind direction modification direction is considered. This algorithm is somehow similar to the evaluation algorithm a) ("slope"). Herein, the binned performance quantity, yd, is averaged for binned relative measured wind directions smaller than 0° (xd < 0°) and averaged for binned relative measured wind directions larger than 0° (xd > 0°), respectively. The higher average value indicates the direction which the wind direction should change to maximize the performance quantity.

A positive output is provided, if the average of yd at (xd > 0°) is superior. A negative output is provided, if the average of yd at (xd < 0°) is superior. Accordingly, the performance evaluator 53 outputs a modification value 55c and provides it to the wind direction modifier 67 which uses this value 55c to derive a wind direction offset 69.

The values 55a, 55b, 55c may be considered as a modification value as used herein. Alternatively, the wind direction offset 69 may be identified as the modification value used herein.

It should be noted that the performance evaluator may only output one of the different modification values, i.e. either 55a, 55b or 55c. In other embodiments, two or more of the different modification values 55a, 55b, 55c may be combined, for example averaged and the average may be provided to the wind direction modifier 67.

The wind direction offset 69 may, in particular embodiments, be binned according to some sorting parameter, for example the wind speed. Thereby, a wind direction measurement calibration/correction that takes the wind speed into account can be achieved.

Embodiments of the present invention may thereby provide reliable wind direction measurement equipment which may allow to remove yaw errors, increase turbine power production significantly, decrease turbine load, and align turbines.

According to embodiments of the present invention, the change in the wind direction and the change of some performance parameter are continuously expressed. Further, the correlation, or any other value related to the correlation, between changes in the wind direction and changes in the performance parameter are continuously estimated. Further, continuously, a small gain directly proportional the estimated correlation is subtracted from the wind direction as measured by the wind direction measuring device. Further, the wind direction measurement is modified with the wind direction modification derived from the correlation value. Embodiments of the present invention may increase the turbine power production significantly and/or may decrease turbine loads.

As has been mentioned earlier, the performance parameter could comprise or be many different quantities. It is suggested to use the effective wind speed, but other quantities like produced power, rotor speed, pitch angle, or some quantity expression the turbine loads could also be used. In fact, any parameter related to the nacelle yaw position (relative to the wind direction) could potentially be used.

As has also be mentioned above, the wind direction modification may be a single number applied under all (wind) conditions at all time, but in other embodiments it could also be any kind of transfer function expression how the wind direction should be modified depending on one or more parameters, for example the wind speed.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method for performing a wind direction measurement for a wind turbine (1), the method comprising:
measuring plural sample pairs ((x,y), (α',51)), each pair comprising a measured relative wind direction (x, α') and an associated performance quantity (y, 51),
the measured relative wind direction (x, α') representing a measurement result of measuring a difference angle between a real wind direction (19) and an orientation (14) of a measurement equipment (15), in particular a direction (13) orthogonal to a rotor blade plane (11),
the performance quantity (y, 51) indicating a performance of the wind turbine;
evaluating a degree of asymmetry of the performance quantity (y, 51) with respect of a measured relative wind direction equal to zero;
measuring a further relative wind direction; and
correcting the further measured relative wind direction based on the degree of asymmetry.

2. Method according to claim 1, further comprising:
defining a bin vector (xd), each component comprising a range of wind direction angles;
defining an average performance vector (yd), each component being an average of the performance quantity (y, 51) comprised in the sample pairs, for which the measured relative wind direction lies within the range of angles defined by the corresponding component of the bin vector;
defining a count vector (nd), each component comprising the number of sample pairs, that lie within the respective range of angles defined by the corresponding component of the bin vector;
utilizing the bin vector, the average performance vector, and the count vector for evaluating the degree of asymmetry.

3. Method according to claim 1 or 2,
wherein the evaluating the degree of asymmetry further comprises:
fitting a straight line (57) on a curve (65) defined by the plural sample pairs or pairs (63) of measured relative wind direction and performance quantity as defined by the bin vector (xd), the average performance vector (yd), and the count vector (nd); and
determining the slope of the straight line (57),
wherein the correcting the further measured relative wind direction based on the degree of asymmetry comprises:
subtracting from the further measured relative wind direction a modification value (55a) based on the slope of the straight line (57).

4. Method according to the preceding claim, wherein the modification value (55a) is proportional to the slope of the straight line (57), wherein a proportionality factor is non-negative.

5. Method according to one of the preceding claims 1 to 3, wherein the evaluating the degree of asymmetry comprises:
determining a maximum location (58) being that measured relative wind direction (x, α') or that range of angles for which the associated performance quantity (y, 51) or averaged performance quantity is maximal or maximized;
wherein the correcting the further measured relative wind direction based on the degree of asymmetry comprises:
subtracting from the further measured relative wind direction a modification value (55b) proportional to the maximum location, wherein a proportionality factor is in particular larger than zero.

6. Method according to one of the preceding claims 1 to 3, wherein the evaluating the degree of asymmetry comprises:
averaging the performance quantity (y, 51) or the averaged performance quantity for which the associated measured relative wind direction (x, α') or the angle range is larger than zero, to obtain a first average performance quantity; and
averaging the performance quantity (y, 51) or the averaged performance quantity for which the associated measured relative wind direction (x, α') or the angle range is smaller than zero, to obtain a second average performance quantity; and
determining which of the first average performance quantity or the second average performance quantity is larger;
wherein the correcting the further measured relative wind direction based on the degree of asymmetry comprises:
determining a modification value (55c) that
is positive, if the first average performance quantity is larger than the second average performance quantity;
is negative, if the first average performance quantity is larger than the second average performance quantity; and
subtracting the modification value (55c) from the further measured relative wind direction.

7. Method according to one of the preceding claims 3 to 6, further comprising:
while measuring the plural sample pairs, determining at least one operational and/or environmental parameter, in particular a wind speed; and
storing the modification value (55a, 55b, 55c) in association of with the at least one operational and/or environmental parameter.

8. Method according to the preceding claim, further comprising:
determining the operational and/or environmental parameter; and
subtracting a value proportional to the modification value (55a, 55b, 55c) associated to the determined operational and/or environmental parameter to obtain the corrected measured relative wind direction (α").

9. Method according to the preceding claim, wherein
a proportionality factor is selected to convert the degree of asymmetry or the modification value to an angle offset

10. Method according to one of the preceding claims, wherein the method is continuously performed, in particular during normal operation,
wherein the method is further in particular performed irrespective whether the wind direction and/or wind speed and/or yaw position changes or not.

11. Method according to one of the preceding claims, wherein the performance quantity is or comprises at least one of the following:
an effective wind speed (13), representing a measure of the wind speed experienced by the wind turbine effective for energy production, in particular representing a component of the wind speed in a direction orthogonal to a rotor blade plane,
a power, in particular active power, produced by the wind turbine, in particular applied in low and medium wind ranges;
a pitch angle, in particular applied at high wind speed;
an increase in rotor speed, in particular applied at low wind speed.

12. Method according to the preceding claim, wherein the effective wind speed (13) is estimated using a wind turbine model, taking into account actual power produced, actual rotor speed, and/or actual pitch angle.

13. Arrangement for performing a wind direction measurement for a wind turbine (1), wherein the arrangement is adapted
to receive plural measured sample pairs ((x,y), (α',51)), each pair comprising a measured relative wind direction (x, α') and an associated performance quantity (y, 51),
the measured relative wind direction representing a measurement result of measuring a difference angle between a real wind direction (α) and an orientation (14) of a measurement equipment (15), in particular a direction (13) orthogonal to a rotor blade plane (11),
the performance quantity (y, 51) indicating a performance of the wind turbine;
to evaluate a degree of asymmetry of the performance quantity (y, 51) with respect of a measured relative wind direction (x, α') equal to zero;
to receive a further measured relative wind direction; and
to correct the further measured relative wind direction based on the degree of asymmetry.

14. Wind turbine (1), comprising:
a rotor (3) having rotor blades (9) connected thereto and rotatable in a rotor blade plane (11);
an arrangement (3) for performing a wind direction measurement for the wind turbine according to the preceding claim; and
a yawing system (23) for directing the rotor blade plane based on measured relative wind directions obtained by the arrangement for performing the wind direction measurement; in particular further comprising at least one of a wind direction measuring device:
a wind vane;
a sonic wind direction measuring device for measuring the plural samples of the relative wind direction.
